Europäisches Patentamt

European Patent Office

Office européen des brevets

(11) Publication number: **0 020 112**
A1

# EUROPEAN PATENT APPLICATION

(21) Application number: **80301728.4**

(51) Int. Cl.³: **A 01 J 5/04**

(22) Date of filing: **23.05.80**

(30) Priority: **25.05.79 SE 7904586**

(43) Date of publication of application: **10.12.80**
**Bulletin 80/25**

(84) Designated Contracting States: **DE FR GB NL**

(71) Applicant: **ALFA-LAVAL AB, Box 500, S-147 00 Tumba (SE)**

(72) Inventor: **Olofsson, Hans Kristoffer, Skogsvagen 17, S-141 44 Huddinge (SE)**

(74) Representative: **Simpson, Ronald Duncan Innes et al, A.A.Thornton & Co. Northumberland House 303-306 High Holborn, London WC1V 7LE (GB)**

(54) **Milking plant.**

(57) In a milking plant arranged to operate with two different vacuum levels, a single vacuum source is provided and produces a low vacuum in a low vacuum line system (1), and an ejector (6) produces a higher vacuum in a high vacuum line system (11, 12), the ejector (6) being connected between the two line systems.

ACTORUM AG

- 1 -

## Milking plant

The present invention relates to milking plants and, in particular, to a milking plant which operates with at least two different vacuum levels.

In known milking plants which operate with more than vacuum level, the vacuum is usually provided by a vacuum pump which produces a high vacuum, and a reduction valve is used to reduce the vacuum level to a suitable lower vacuum. A drawback of this arrangement is that a relatively large vacuum pump is required since the pump is required to work constantly against high vacuum, and the capacity of a vacuum pump is reduced with increasing vacuum. The results are a relatively large energy consumption and a high operating temperature of the vacuum pump.

It is also known to provide a milking plant with two entirely separate vacuum systems, one for high vacuum and one for low vacuum, and each provided with its own vacuum pump. In this case no reduction valve is required since the vacuum pumps are arranged to produce the desired vacuum levels. However, such a plant is relatively expensive since two vacuum pumps and motors are required.

The aim of the present invention is to eliminate or reduce the disadvantages of the above described milking plants. A milking plant according to the invention is characterized in that it comprises a vacuum source arranged to produce a low level vacuum, and an ejector connected to the vacuum source to generate a higher level vacuum.

A simple and economical solution is achieved to the vacuum supply problem in milking plants operating with two different vacuum levels. Since the vacuum pump delivers only low vacuum, its operating temperature will be lower. In certain cases the energy required for the supply of vacuum is also reduced. It is true that an ejector has a lower efficiency than a vacuum pump, but since the consumption of high vacuum is only a small portion of the total vacuum consumption, an overall improvement in the efficiency of the vacuum supply system is still obtained in comparison with the known system comprising a high level vacuum pump and reduction valve.

The invention is described in more detail below with reference being made to the accompanying drawings, in which:-

Figures 1 and 2 are diagrammatical perspective views of two milking plants according to the invention; and

Figure 3 is a longitudinal section through an ejector.

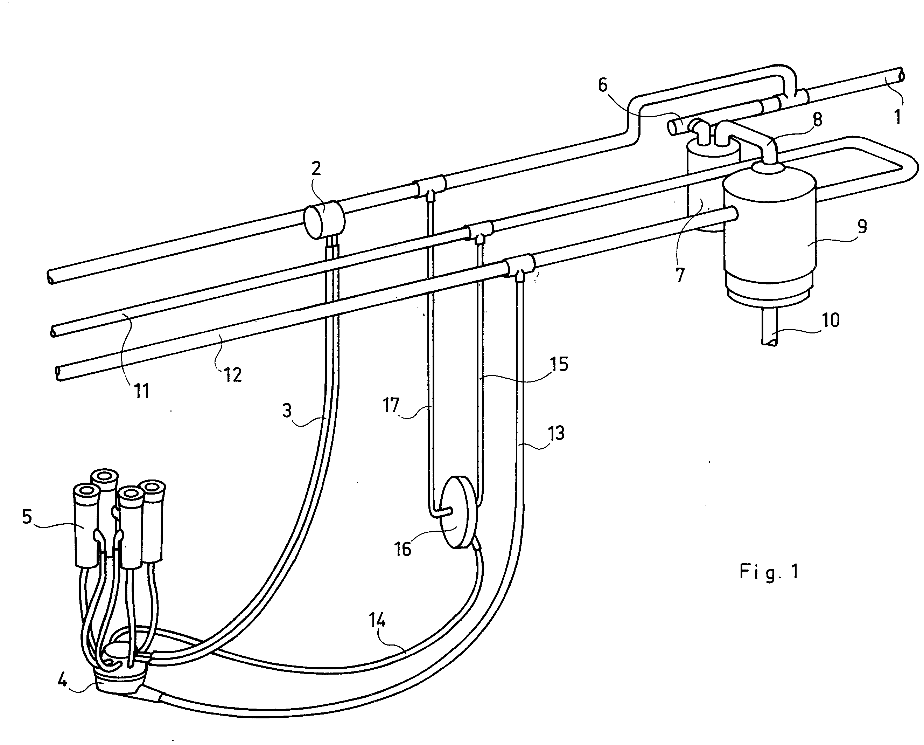

The milking plant shown in Figure 1 comprises a pipeline 1 connected to a vacuum pump (not shown) which delivers a low vacuum of e.g. 50 kPa. The pipeline 1 has a pulsator 2 connected thereto, the pulsator being connected by hoses 3 to a milk claw 4 with teat cups 5. An ejector 6 is also connected to the pipeline 1, said ejector being connected via a so-called sanitary trap 7 and a pipeline 8 to a milk receiver jar 9. The jar 9 is provided with a milk outlet 10 connected to a storage tank (not shown) and is further connected to a vacuum line 11 and a milk line 12.

The milk claw 4 is connected to the milk line 12 by a milk hose 13 and to the vacuum line 11 by vacuum hoses 14, 15 and a vacuum stabilizing valve 16. The valve 16 is also connected to the pipeline 1 through a hose 17.

The vacuum pump produces in pipeline 1 a low level vacuum of e.g. 50 kPa. By means of the ejector 6 this vacuum level is raised to a higher level, e.g. 65 kPa, and this higher vacuum is conveyed to the milk line 11 and vacuum line 12. In the valve 16, which is of well known design, the high vacuum is reduced to the lower level (50 kPa) appropriate for milking, the low vacuum supplied via the hose 17 being used as control vacuum. Milk is conveyed from the milk claw 4 by the high vacuum through the hose 13 and the pipeline 12 to the jar 9. The milk is pumped from the jar 9 by a pump which is not shown. The milk claw is provided in a known manner with a float controlled valve which prevents air from escaping via the milk hose 13.

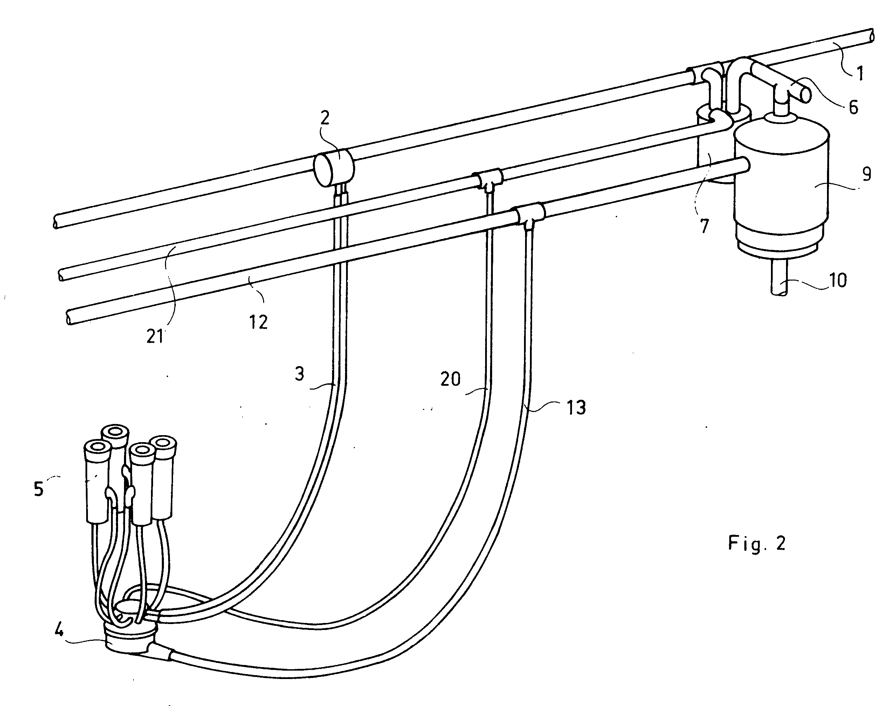

Figure 2 illustrates another milking plant, the same reference numerals having been used to indicate elements corresponding to those of the milking plant shown in Figure 1. In this embodiment the claw 4 is connected by a vacuum hose 20 to a low vacuum line 21 which is connected to the sanitary trap 7. The ejector 6 is interposed between the sanitary trap 7 and the jar 9 and generates a high level vacuum for the milk transport from the claw 4 to the jar 9. Since high vacuum is supplied only to the pipeline 12 the consumption of high vacuum is considerably lower than it is in the milking plant of Figure 1. Consequently an ejector having a correspondingly lower capacity can be used.

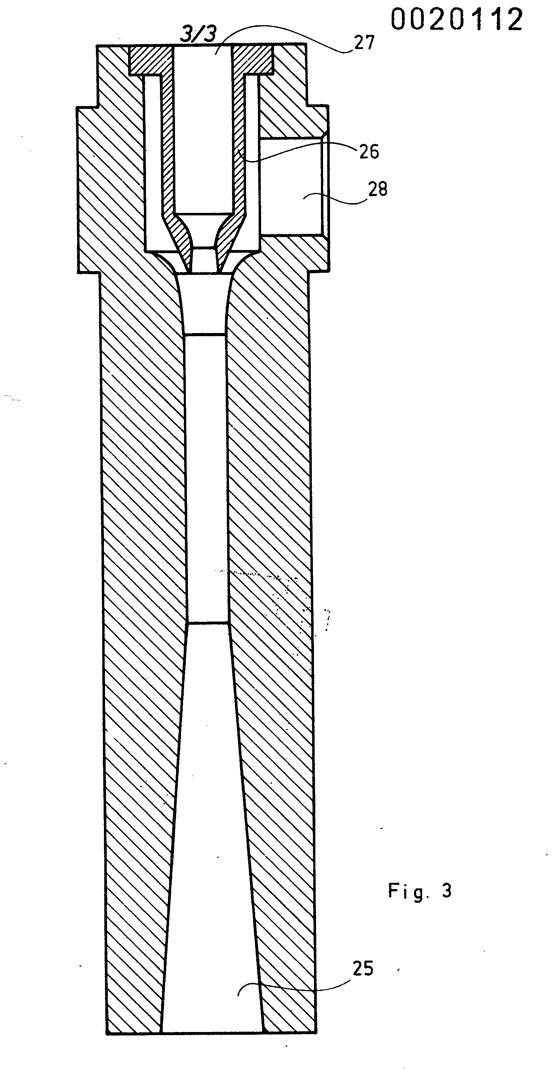

An ejector shown on an enlarged scale in Figure 3 comprises a generally cylindrical body having an air outlet 25 at one end for connection to a vacuum source. An inlet nozzle 26 is located in the other end of the ejector body and defines an air inlet 27 open to atmosphere. A radially directed high vacuum port 28 is formed in the body adjacent the nozzle 26. By connecting the outlet 25 to a vacuum pump producing a low vacuum, e.g. 50 kPa, a higher vacuum, e.g. 65 kPa, can be provided at the high vacuum port 28.

- 1 -

<u>Claims</u>:

1.      A milking plant comprising a vacuum source
and arranged to operate with at least two different
vacuum levels produced from the vacuum source,
characterized in that the vacuum source is arranged
to provide a low level vacuum, and an ejector (6) is
connected to the vacuum source to generate a higher
level vacuum.

2.      A milking plant according to claim 1, wherein
a low level vacuum line system (1) is connected to the
vacuum source, and a high level vacuum line system
(11,12) is connected to the low level line system (1)
through the ejector (6).

3.      A milking plant according to claim 2, wherein
the high level vacuum line system comprises a milk
transport line (12,13) and a vacuum line (11,14,15)
provided with a vacuum stabilizing valve (16).

Fig. 1

Fig. 2

3/3

0020112

27

26

28

25

Fig. 3

## DOCUMENTS CONSIDERED TO BE RELEVANT

| Category | Citation of document with indication, where appropriate, of relevant passages | Relevant to claim |
|---|---|---|
| | FR - A - 2 338 400 (SOCIETE D'APPLICATIONS DE LA VENTILATION S.A.R.L.) <br> * Page 1, lines 1-42; page 2, lines 1-28; page 3, claims 1-10; figures 1,2 * | 1 |
| | FR - A - 468 434 (SUDFELDT) <br> * Page 1, lines 1-25; page 2, lines 6-16; figure 1 * | 1 |
| | FR - A - 1 594 929 (CONTE) <br> * Page 1, lines 1-41; page 2, lines 1-18; figure 1 * | 1 |
| A | FR - A - 2 065 129 (ALFA-LAVAL) <br> * Whole document * | 1 |

**CLASSIFICATION OF THE APPLICATION (Int. Cl. 3)**

A 01 J 5/04

**TECHNICAL FIELDS SEARCHED (Int.Cl. 3)**

A 01 J
F 04 F

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-08-1980 | VERDOODT |

EPO Form 1503.1 06.78